# EUROPEAN PATENT SPECIFICATION

(11) **EP 1 806 975 B1**
(45) Date of publication and mention of the grant of the patent: **17.12.2008**
(21) Application number: 05796750.7
(22) Date of filing: 03.10.2005
(51) Int. Cl.: A23L 1/20, A23J 3/16, A23J 3/08, A23L 1/307, A23L 1/32

(54) **A METHOD FOR PREPARING A FOOD PRODUCT AND A PACK CONTAINING FROZEN OR CHILLED SEMI-FINISHED FOOD PRODUCT**
VERFAHREN ZUR ZUBEREITUNG EINES LEBENSMITTELS UND EIN GEFRORENES ODER GEKÜHLTES HALBFERTIGLEBENSMITTELPRODUKT ENTHALTENDE VERPACKUNG
PROCEDE DE PREPARATION D'UN PRODUIT ALIMENTAIRE ET EMBALLAGE CONTENANT UN PRODUIT ALIMENTAIRE SEMI-FINI CONGELE OU REFRIGERE

(30) Priority: 01.11.2004 EP 04078000
(43) Date of publication of application: 18.07.2007
(73) Proprietor: Unilever N.V., 3013 AL Rotterdam (NL); Unilever PLC, London Greater London EC4P 4BQ (GB)
(72) Inventor: BODOR, Janos Unilever R & D Vlaardingen, NL-3133 AT Netherlands (NL); PETTEN, Arjan, Merijn, NL-3581 PD Utrecht (NL)
(74) Representative: Rots, Maria Johanna Francisca
(86) International application number: PCT/EP2005/010691
(87) International publication number: WO 2006/048093

(56) References cited:
- EP-A- 0 702 901
- EP-A- 1 254 604
- EP-A- 1 452 098
- CA-A1- 2 154 224
- DE-C1- 4 302 183
- DE-U1- 29 812 644
- US-A- 3 953 611
- US-A1- 2003 096 041
- US-A1- 2004 115 327

## Description

The invention relates to a method for preparing a food product and to a pack containing frozen semi-finished food product suitable for use in the method.

Food consumption patterns have radically changed over the past few decades. A large proportion of food is no longer prepared in the home, but instead is purchased in restaurants, canteens and other food outlets. In particular, a substantial portion of food is now prepared and consumed in so-called fast food outlets. These developments and the increasing affluence have lead to serious health problems. In some countries nearly half the population is overweight and the problem is increasing rapidly. A further aspect of the problem is that people have developed a taste for easy-to-eat food like hamburgers, which tend to have an undesirable nutritional profile. Nutritionists advise to reduce the intake of fat, especially trans and saturated fat, carbohydrates, especially carbohydrates with a high glycemic index, and salt. On the other hand, substantial nutritional benefit could be achieved by raising the consumption of vegetables and fruits. Many attempts are being made to persuade people to adopt more healthy lifestyles and to eat more healthy food, but those attempts are thus far not very successful. It is especially difficult to persuade the younger age group to choose healthier food. A further aspect of the problem is that the food outlets from which younger people tend to buy a substantial portion of their food, must keep their prices low. Consequently, they can only offer food from relatively cheap ingredients that can be prepared easily, without failures, by relatively low cost personnel that does not have a high training level.

Meat burgers have been challenged as having a particularly undesirable nutritional profile. In an effort to improve the nutritional quality of the products on offer, fast food outlets have started offering vegetable burgers and the like. Typically such products comprise pieces of vegetables in a starch-based sauce that serves as adhesive material to keep the vegetable pieces glued together. The patties are coated with bread crumbs or the like. To prepare the vegetable burgers for consumption, they are deep-fried in the fast food outlet and usually placed in a bun together with some salad and dressing. However, the starch-based sauce serving as adhesive material in the vegetable burger causes the carbohydrate content to be undesirably high. The deep-frying leads to a high fat content. The vegetable burgers could not suitably be heated in e.g. a microwave oven amongst other things because this would lead to a non-crisp, soggy coating, which is not much appreciated.

EP 0 702 901 describes the preparation of analogues of minced meat products such as hamburgers using granular proteinaceous material. This material is based on heat coagulable vegetable protein e.g. soy protein isolate. US 3,953,611 discloses a shaped protein food product, e.g. hamburger patty analog, that comprises edible textured protein particles bound together by heat-set 7S soybean protein isolate. US 2004 / 115327 describes a high protein and low calorie food preparation in the form of a raw batter capable of being shaped, e.g. into patties, designed to be cooked directly at the time of consumption. The product resembles traditional potato-based products. CA 2,154,224 describes a process for preparing a frozen patty which can be cooked to provide an omelet. It contains egg whites, vegetables and potato flakes. US 6,524,638 describes precooked egg patties that are intended for future heating in a microwave oven for consumption as a portion of a food article.

Shaped food products comprising protein are further disclosed in DE 43 02 183, US 2003/096041, EP 1 254 604 and DE 298 12 644.

We have now found a method for preparing a food product, that can be used under conditions as often apply for fast food outlets and that provide a food product with a relatively good nutritional profile. Specifically it combines relatively low fat and carbohydrate contents with substantial amounts of protein and vegetables. It offers the food in the easy-to-eat format that is typically attractive to the young people. The method can be applied by personnel with relatively little training without a substantial risk of errors.

Accordingly, the present invention provides a method for preparing a food product wherein one or more cooked patties are stored in packaging at a temperature below 10°C, which patties have a moisture content of 70-90 wt% and a fat content of 1-15 wt%, which patties comprise gelled protein and vegetable particles, and which patties comprise protein and carbohydrate in a weight ratio of at least 1.5:1, in which method at least one patty is separated from the packaging and taken from the storage and at least one patty is subsequently subjected to a dry heat treatment to raise the temperature of the interior of the patty to above 40°C.

The invention also provides a pack containing frozen semi-finished food product suitable for use in the present method, which pack comprises one or more cooked patties, which patties have a moisture content of 70-90 wt% and a fat content of 1-15 wt%, which patties comprise gelled protein and vegetable particles, which patties comprise protein and carbohydrate in a weight ratio of at least 1.5:1 and which patties have an interior temperature of less than -4°C.

A patty is a piece of food product containing food particles and adhesive material that holds the particles together. The particles can be ground, chopped or cut particles of meat, fish, vegetables or other food particles. The shape of the piece of food product is not critical but preferably the piece has the shape of a slice. It can however be in the shape of, for example, a ball or a cylinder. A patty is usually a round slice but, alternatively, it can be square, rectangular, triangular or irregularly shaped. Its largest dimension of the piece of food product is usually between 5 and 15 cm. The smallest dimension, typically the thickness of the slice, is usually in the order of 0.5-5 cm, more commonly 1-3 cm. In the case of vegetable burgers, the adhesive material holding the particles together is typically a starch based sauce, as described above. In other patties, starch based materials are applied as adhesive materials in the form of for example compressed pasta or rice. In the present invention the adhesive material is preferably constituted by a gelled protein structure. The present cooked patties preferably do not have a bread crumb coating.

In the present method a dry heat treatment is applied. We do not wish to be bound by theory but we believe that because of the high protein to starch ratio and the presence of gelled protein in the cooked patty, there is no need to apply deep frying. We think also that, because of the structure provided by the gelled protein, there is no need for an outer layer of bread crumbs or the like on the patty. This avoids the carbohydrates normally contained in bread crumbs and it also contributes to the avoidance of fat in the heating step and consequently facilitates obtaining a beneficial nutritional profile. By a dry heat treatment is meant a heating method that makes the interior of the patty reach the desired temperature without substantially raising the fat content of the patty. A heating method is not raising the fat content of the patty substantially if the increase in fat content caused by the heat treatment is 3 wt% or less, calculated on the weight of the patty (i.e. expressed as absolute, as percentage points, not as a portion of the fat contained in the patty). Examples of suitable dry heat treatments are heating on a hot plate, heating under a grill, infrared heating and heating in a microwave oven or in another oven. The heating may also be done for example in a non-stick pan on a gas cooker. Other methods can also be applied provided that it is avoided that the fat content of the cooked patty increases by more than 3 wt% as a result of the heat treatment. Preferably the increase in fat content as a result of the heat treatment is no more than 1 wt%. Most preferably the fat content of the cooked patty does not increase at all during the heat treatment. It may even reduce somewhat.

The cooked patties can be prepared and packed in a food factory with well-developed quality assurance methods following a detailed recipe and preparation procedure. The cooked patties are stored at chilled or frozen conditions. They can then be transported under such preserving conditions to the point of use, e.g. a fast food restaurant. The personnel at the point of use only needs to take the cooked patty from the cold store and remove the packing material and then heat the patty. The patty can then be served e.g. on a bun with salad and optionally with raw vegetables, cheese, sauce or dressing and/or seasoning.

The gelled protein needs to be present in the cooked patty that provides the starting material for the present method and that is contained in the present pack as semi-finished food product. The expression "cooked" in "cooked patty" indicates a heating method that causes protein that is still in an un-denatured stage to develop its gel structure. It includes e.g. au-bain-marie heating, heating in a container that can be submerged in hot water, heating in a steam cooker or otherwise in hot steam, heating in a microwave oven or a conventional oven, and e.g. heating in a frying pan, for example using a mould or ring to obtain the patty in the desired shape. The patty can be cooked while it has already been given the desired shape, e.g. using a mould or a ring. Alternatively, it can be put in a bigger container of a different shape, e.g. a sausage-like casing or mould, be cooked and subsequently be shaped to the desired patty form, e.g. by cutting slices from the sausage-shaped material.

The choice of packaging material is not critical and a wide range of materials is available. For example, the patties can be packed in plastic containers or cardboard boxes. The packaging material can be chosen depending on whether the cooked patties are to be shipped and stored in frozen or chilled condition. Preferably the cooked patties are stored frozen. In the pack of frozen semi-finished food product of the invention, the interior temperature of the patties is less than -4°C. Suitably the packaging is done such that individual cooked patties can easily be taken from the pack without necessarily taking the whole container from the storage. In a preferred embodiment, the patties are first deep frozen and then they are packed. In any case, to achieve suitable shelf life, the cooked patties should be stored in packaging at a temperature below 10°C. They can be stored chilled, preferably at a temperature of 2-8°C, but it is preferred that they are stored frozen, preferably at a temperature of -4 to -30 °C, more preferably at -8 to -24 °C.

The cooked patties should have a moisture content of 70-90 wt% and a fat content of 1-15 wt%. The moisture content is preferably 77-87 wt%. A small amount of fat is desirable for nutritional and organoleptic reasons. It also contributes to make the present method easily applicable. The fat content is preferably 3-10 wt%, especially 5-8 wt%. The patties should comprise vegetable particles. In the present application, the expression "vegetable particles" includes fruit, herbs and spices particles. The patties may also include meat, fish and/or cheese particles. However, preferably the major portion, if not all, of the particles contained in the patties are vegetable particles, in particular pieces of pepper, mushrooms, eggplant, onion, courgette, corn, tomato, cauliflower, broccoli, potato, seeds and / or beans and the like. In a preferred embodiment the patties comprise particles of pepper, onion, mushroom, corn or a combination of two or more thereof.

The size of the particles is not critical. Apart from herbs and spices that will usually have a small particle size, typically the particles will be cut to have a major dimension between 0.5 and 2 cm and a minor dimension of less than 1 cm, such that the major dimension is bigger than the minor dimension. The particles need not be regularly shaped. For example, cauliflower or broccoli particles may be included. Vegetables that have a suitable size may be included as such without cutting or grinding them, e.g. sweet corn, peas and seeds such as poppy seeds, sesame seeds and sunflower seeds. The vegetable and optionally other particles may be combined in uncooked form with the protein-rich composition that is to constitute the adhesive material in the cooked patty. Alternatively, part or all of the particles may be heat-treated beforehand. For example, they may be cooked, roasted or stir-fried.

In the cooked patty, the particles are embedded in or held together by the adhesive material. The properties of the adhesive material are preferably dominated by the gelled protein. The adhesive material may be omelet-like material made with whole hens eggs, possibly with milk, and the cooked patty may be prepared using a conventional omelet recipe including a suitable amount of vegetable particles in the recipe, and shaping the omelet as desired for the patty. The use of a patty with omelet-like substance constituting the adhesive material has the advantage that it is not only suitable for consumption e.g. at lunch or diner, but it can also be served at breakfast. To the contrary, beef burgers and vegetable burgers are not usually considered suitable for consumption at breakfast.

The choice of ingredients to constitute the adhesive material and the particles of the patty should be such that overall the weight ratio of protein and carbohydrate is at least 1.5:1. Preferably, the weight ratio of protein and carbohydrate is between 2:1 and 30:1, more preferably between 2:1 and 15:1.

The cooked patties are preferably kept stored in their packaging in frozen condition. To prepare the patty or patties for consumption, a pack with one or more frozen or chilled patties is taken from the storage, the patty or patties are removed from the packaging and one or more of the patties are then dry heated. Alternatively, the pack of cooked patties is kept in the storage, one or several patties are taken from the pack and one or more of the patties are then dry heated. After removing the cooked patties from the chilled or frozen storage, they can be allowed to warm up wholly or partially to ambient temperature or they can be subjected to the dry heat treatment directly after removal from the cold store.

The present method is to be distinguished from the methods applied for so-called meals-ready-to-eat, applied e.g. by backpackers or soldiers in the field, in which methods typically the products are stored at ambient temperature and the products are often heated before consumption in their packaging. Ready-to-eat products are usually sterilized, which is not preferred for the present cooked patties. The sensoric properties of the products can be better if the products do not need to be sterilized. To find acceptance in fast food outlets, the taste and flavour profile of the product needs to be excellent. Accordingly, it is preferred that the cooked patties have not been sterilized.

The protein content of the cooked patties is preferably 5-20 wt%, more preferably 6-15 wt%, especially 7-12 wt%.

The amount of vegetable particles in the patty is preferably 10-60 wt%, more preferably 30-50 wt%.

The adhesive material in the patty may be constituted by omelet made with whole hens eggs. Preferably however, the cooked patties are substantially free of egg yolk. Preferably any egg yolk derived material contained in the cooked patties constitutes less than 1 wt%, especially less than 0.5 wt%, of the cooked patties, but most preferably the cooked patties do not include any material at all derived from egg yolk.

The protein in the patty comprises gelled protein. Preferably the protein comprises vegetable protein. The protein more preferably consists of vegetable protein, microbial protein, milk protein, egg white protein or a combination of two or more thereof. Of the vegetable proteins, in particular soy protein is preferred. Preferably, 20-90 wt% of the protein is vegetable protein. More preferably, the protein contained in the cooked patties includes 20-90 wt% soy protein, especially 30-70 wt% soy protein. However, the patties may also contain for example, canola protein, wheat protein and/or pea protein. It is particularly preferred that the protein contained in the cooked patties comprises soy protein and milk protein. In a most preferred embodiment the protein contained in the cooked patty includes soy protein, milk protein and egg white protein. The use of a combination of protein types can contribute to obtain a good organoleptic profile. For example, suitably adhesive properties can be achieved with the use of egg white protein as the sole protein source in the adhesive material of the patty. However, the resulting product may then have a somewhat rubbery texture. The palatability can be improved by using a combination of protein sources in the adhesive material of the patty, notably with the combination of soy protein, milk protein and egg white protein.

While not all protein contained in the cooked patty needs to be gelled, the patty should contain gelled protein. Whether protein has taken on a gelled structure can be observed with conventional microscopic techniques, optionally after staining. In practice, the development of gelled protein structure can be observed visually during the cooking of the patties. Protein compositions such as soy protein and egg white protein dissolved in water in an uncooked patty composition, will be fluid, e.g. like an uncooked omelet composition. Upon heating the proteins will unfold, de-nature and develop gel structures that bind water. The composition gradually will become solid. In the cooked composition, the fluidity has been lost, the proteins have been denatured at least partially and the gel structure has developed.

Cooked patties based on vegetable protein, optionally in combination with milk protein and/or egg white protein, are typically less vulnerable to syneresis than patties based on whole egg proteins. In addition they have the benefits of lower cholesterol content and of reduced risk of microbial contamination.

Examples of protein sources that can be used in the patty compositions are soy protein concentrate and isolate, egg white protein, milk protein concentrate and isolate e.g. based on whey protein, but also skimmed milk powder, whey powder, buttermilk powder, casein and caseinate. Part of the protein may also be provided by the vegetable particles or the other particles in the cooked patty. In particular peas and beans can have high protein contents. Also fish or meat or cheese, if included as particles in the patties, may contribute to the protein content.

However, preferably at least half of the protein in the cooked patty is contained in the adhesive material of the patty. More preferably 70-100 wt% of the protein of the cooked patty is contained in the adhesive material. The adhesive material of the cooked patty preferably comprises 70-85 wt% water, more preferably 74-81 wt% water. The adhesive material preferably contains 7-20 wt% protein, more preferably 9-15 wt% protein. The protein to carbohydrate weight ratio in the adhesive material preferably is at least 1.5:1, more preferably it is between 2:1 and 40:1, especially between 3:1 and 30:1. The protein in the adhesive material consists preferably for 20-90 wt% of soy protein. It preferably consists for 15-50 wt% of egg white protein. It preferably consists for 1-50 wt% of milk protein. The milk protein in the adhesive material preferably consists for 50-100 wt% of whey protein. The fat content of the adhesive material is preferably 2-25 wt%, more preferably 5-15 wt%.

If in preparing the cooked patties it is found that the vegetable particles do not remain as evenly distributed in the adhesive material as considered desirable, this can be addressed by raising the viscosity of the adhesive material. This can be done by reducing the water content or by including for example some gum or other thickener. For example, if one wishes to prepare the cooked patties by first heating the composition e.g. in a cylindrical mould to cause the protein to gel and the composition to set and thereafter slicing the cooked cylinder to obtain the patties, then it can be necessary to increase the viscosity of the liquid mixture to prevent the ingredients from precipitating. This can be done by the addition of gums or starches, e.g. cmc or guar gum.

In the present method, the dry heat treatment should be applied to the cooked patty to raise the temperature of its interior to above 40°C. Preferably the patty is heated to raise the temperature of the interior of the patty to 50-95°C, especially to 60-85°C. The dry heating step preferably comprises microwave heating or heating on a hot plate or a combination thereof.

The heated patty can be eaten as such, but preferably it is served with bread placed on at least one side of the heated patty. If bread is placed on one side of the patty, it does not matter which side is up, but conveniently the bread constitutes the lower layer. The patty may be directly in contact with the bread or there may be other food in between, e.g. salad and/or dressing. For example, a slice of bread may be covered with lettuce and cucumber slices, with the patty placed on top of the cucumber and a slice of cheese and some sauce on top of the hot patty. Optionally a further slice of bread may be placed on top. Alternatively, the patty may be placed in a bun, with or without salad, sauce or dressing, seasoning and the like. The use of some bread in combination with the heated patty contributes to the acceptance of the product. However, to prevent an unnecessarily high carbohydrate content in the serving, preferably, the amount of bread combined with the patty is not too high. Preferably the amount of bread used is less than half the weight of the cooked patty.

Preferably the cooked patties are made from vegetable particles with some seasoning and a protein rich composition. Optionally minor amounts of meat, cheese and/or fish particles may be included as well, e.g. small amounts of e.g. baked bacon, grated parmesan cheese and/or small shrimps or shrimp particles, respectively. However, preferably 60-100 wt% of the particles, more preferably 80-100 wt% of the particles are vegetable particles. As protein-rich composition, for example, a whole egg replacer composition or an omelet replacer composition that is free or substantially free of egg yolk can suitably be used. Egg replacer compositions that are free of egg yolk are well known in the art. Particularly preferred materials for preparing the present cooked patties are the egg replacer concentrate and the liquid egg replacer described in EP 1,452,098, which is incorporated herein by reference.

The fat included in the patties can for example be milk fat and/or marine fat but preferably it is vegetable fat. Particularly preferred is the use of oil that is liquid at ambient temperature as source of fat, e.g. sunflower oil or canola oil. The composition may also usefully include some emulsifier, e.g. lecithin.

Throughout this specification all parts, percentages and ratios are by weight unless otherwise indicated. Except in the examples, or where otherwise explicitly indicated, all numbers in this description indicating amounts of material ought to be understood as modified by the word "about".

The term "comprising" is meant not to be limiting to any subsequently stated elements but rather to encompass non-specified elements of major or minor functional importance. In other words the listed steps, elements or options need not be exhaustive. Whenever the word "including" or "having" is used, this term is meant to be equivalent to "comprising" as defined above.

### Example 1

An oil phase composition and a powder phase composition were prepared with the ingredients shown in tables 1A and 1B, respectively.

**Table 1A - oil phase composition**

| Ingredient | Amount (pbw) |
|---|---|
| Sunflower oil | 98.8 |
| Lecithin (Topcithin NGM)* | 1.1 |
| Colorant (30% carotene) | 0.03 |
| Tocopherol mix | 0.03 |
| Flavoring | 0.04 |

| | |
|---|---|
| ***** Topcithin NGM is a transparent soybean lecithin paste with a phosphatide content of 62.5 wt% from Degussa, Netherlands | |

**Table 1B - powder phase composition**

| Ingredient | Amount (pbw) |
|---|---|
| Soy protein isolate (Pro Fam 974)* | 60.3 |
| Egg white powder* | 26.1 |
| Whey protein concentrate (WPC)* | 8.5 |
| Creamer powder* | 2.4 |
| LM pectin* | 0.62 |
| Sodium hydrogen carbonate | 0.49 |
| Citric acid | 0.22 |
| Ascorbic acid | 0.06 |
| Glycin | 0.03 |
| Flavoring | 0.37 |
| Salt | 0.93 |

| | |
|---|---|
| * Pro Fam 974 is a soy protein isolate (protein content 90. wt%, PDI 75% at 20°C) from ADM, Netherlands. The egg white powder used was dried egg white powder, non whippable from Nive, Netherlands (protein content 81 wt%, PDI 100%). The whey protein concentrate was Domovictus 835 from Borculodomo, Netherlands (protein content 35 wt%, PDI 100%). The creamer powder was DP644 obtained from DMV International, Netherlands. It was a spray dried non-dairy cream composition containing 78 wt% vegetable oil and 22 wt% milk solids (15 wt% lactose and 6.5 wt% protein). The low methoxy pectin was LM-101-AS ex CP Kelco, Denmark. | |

The ingredients of each of the phases were mixed. 31.1 pbw of the mixed oil phase composition and 68.9 pbw of the mixed powder phase composition were then combined in a Hobart mixer.

The egg replacer concentrate thus obtained had a water content of 3.0 wt%. It contained 54 wt% protein. The fat content was 32 wt%.

23.5 pbw of the egg replacer composition and 76.5 pbw of water were mixed with an electrical hand mixer for 1 minute to provide a liquid egg replacer.

A red pepper was cleaned, the seeds were removed and the cleaned pepper was cut into particles of about 1 square cm. A medium size onion was sliced in rings of about 0.5 cm thick and then cut further to particles about 1-2 cm long. The onion and pepper particles were dry roasted in a hot frying pan. 45 pbw of these particles were mixed with 71 pbw of the liquid egg replacer and a small amount of seasoning.

Metal rings with a diameter of 8.5 cm and a height of 2 cm were placed in a heated teflon ^{®} pan that was placed on a hot plate at moderate heat. The rings were filled with the mixture of liquid egg replacer,-vegetable particles and seasoning. After about 5 minutes of heating the liquid composition began to loose its fluidity and became firm. The rings were then turned over to allow light browning of the composition on the other side to take place. The rings were removed and after about 2 minutes the patties were taken from the pan and allowed to cool down. When the products had reached ambient temperature, the cooked patties obtained were placed in a plastic container, the patties being separated from one another with greaseproof paper. The container was closed and placed in the refrigerator at 4°C and left overnight. The patties contained about 82 wt% water, 9 wt% protein and 7 wt% fat. The protein to carbohydrate weight ratio was about 4:1.

The next day, a patty was taken from the container and the container was returned to the fridge. The patty was put on a hot plate that had been lightly greased with oil. The patty was heated for 2 minutes on each side. The temperature was measured by sticking a thermometer into the patty. The interior had reached a temperature of 70°C. The outside of the patty had a nice brown colour.

The product was much appreciated by a tasting panel.

Alternatively, a slice of cheese can be melted on top of the patty. In this case, the patty can be heated on a hot plate for 3 minutes and then put under a grill until the cheese has molten.

The patty, with or without molten cheese on it, can suitably be served on a slice of whole meal bread. The bread may be covered first with a lettuce leave and e.g. slices of tomato and/or cucumber, with the heated patty placed on top of the salad.

Instead of storing the cooked patties in the refrigerator, they can be stored in a deep freeze, e.g. at -18°C. At such temperature they can be kept for at least 3 months time. In such case, the container used for packing the cooked patties should be a deep freeze container, e.g. such as those used for storing ice cream over prolonged periods of time at such temperature.

### Examples 2-4

Example 1 was repeated except that as vegetable particles the following compositions were used:

| Example | 2 | 3 | 4 |
|---|---|---|---|
| Vegetable particles | (pbw) | (pbw) | (pbw) |
| Mushroom slices (roasted) | 40 | - | - |
| Bell pepper (roasted) | - | 10 | 35 |
| Onion (roasted) | - | - | 10 |
| Parsley | 3 | - | - |
| Dry Italian herbs | - | - | 0.05 |
| Sweet corn (cooked, drained) | - | 35 | - |

For preparing the cooked patties, in each case 71 grams of the liquid egg replacer as described in example 1 was combined with, for example 2, 44 grams of the vegetable particles and for each of the examples 3 and 4, 46 grams of the vegetable particles.

To prepare the cooked patties after overnight storage in the refrigerator at 6°C for consumption, the patties were placed in a heated frying pan, together with about 0.9 wt% of oil calculated on the weight of the patties.

The composition of the patties was as follows:

| Example | 2 | 3 | 4 |
|---|---|---|---|
| Water content (wt%) | 82 | 80 | 84 |
| Fat content (wt%) | 5.6 | 6.1 | 5.7 |
| Protein content (wt%) | 9.6 | 8.7 | 8.1 |
| Soy protein as wt% of protein | 56.3 | 61.3 | 65.8 |
| Protein to carbohydrate wt ratio | 7.4:1 | 2.3:1 | 5.0:1 |

The weight of the patties was 115, 117 and 117 grams per serving for examples 2, 3 and 4, respectively. The heated patties were served on buns of 45 grams each. Each bun was garnished with 10 g of lettuce, 0.3 g salt and a Mozzarella slice of 10 g. In addition for examples 3 and 4, 3 g of tomato ketchup, and for example 3, 8 g of a gherkin slice was used.

Very good products with a good nutritional profile were obtained.

### Example 5

Example 1 was repeated except that the heat treatment to cause the gelation of the protein in the preparation of the cooked patties was applied in a conventional oven. Flexible silicon moulds with a diameter of 8 cm were filled with a mixture of 71 pbw of the liquid egg replacer and 45 pbw of dry roasted vegetable particles. The moulds were covered and placed in a pre-heated oven at 165°C and baked for 15 minutes. The moulds were then taken from the oven and the patties were allowed to cool down. The patties were then taken from the moulds and placed in a plastic container, separated from one another with greaseproof paper. The patties were about 2.5 cm thick.

### Example 6

Example 1 was repeated except that the powder phase composition was as follows:

| Ingredient | Amount (pbw) |
|---|---|
| Soy protein isolate (Pro Fam 974) | 30.1 |
| Egg white powder | 26.1 |
| Whey protein concentrate (WPC) | 8.5 |
| Whey protein isolate* | 30.3 |
| Creamer powder | 2.4 |
| LM pectin | 0.62 |
| Sodium hydrogen carbonate | 0.49 |
| Citric acid | 0.22 |
| Ascorbic acid | 0.06 |
| Glycin | 0.03 |
| Flavoring | 0.37 |
| Salt | 0.93 |

| | |
|---|---|
| * The whey protein isolate was Nutrilac DR7523 from Arla Foods, Denmark (protein content 77wt%, PDI 100%). | |

This product was also given a positive assessment by the tasting panel.

## Claims

1. A method for preparing a food product wherein one or more cooked patties are stored in packaging at a temperature below 10°C, which patties have a moisture content of 70-90 wt% and a fat content of 1-15 wt%, which patties comprise gelled protein and vegetable particles, and which patties comprise protein and carbohydrate in a weight ratio of at least 1.5:1, in which method at least one patty is separated from the packaging and taken from the storage and at least one patty is subsequently subjected to a dry heat treatment to raise the temperature of the interior of the patty to above 40°C.

2. A method according to claim 1 wherein the patties comprise protein and carbohydrate in a weight ratio between 2:1 and 30:1.

3. A method according to claim 1 or claim 2 wherein the protein contained in the patties consists of vegetable protein, microbial protein, milk protein, egg white protein or a combination of two or more thereof.

4. A method according to any one of claims 1-3 wherein the protein comprises soy protein and milk protein.

5. A method according to claim 4 wherein the protein further comprises egg white protein.

6. A method according to any one of claims 1-5, wherein the patties comprise 10-60 wt% of vegetable particles.

7. A method according to any one of claims 1-6 wherein the patties comprise particles of pepper, onion, mushroom, corn or a combination of two or more thereof.

8. A method according to any one of claims 1-7 wherein the dry heat treatment comprises microwave heating, heating on a hot plate, or a combination thereof.

9. A method according to any one of claims 1-8 wherein the patty is heated to raise the interior of the patty to a temperature of 50-95°C.

10. A method according to any one of claims 1-9 wherein bread is placed on at least one side of the heated patty.

11. A method according to claim 10 wherein the heated patty is placed in a bun.

12. A method according to any one of claims 1-10 wherein the cooked patties are stored at a temperature between -4°C and -30°C.

13. A pack containing frozen semi-finished food product suitable for use in the method of any one of claims 1-12 which pack comprises one or more cooked patties, which patties have a moisture content of 70-90 wt% and a fat content of 1-15 wt%, which patties comprise gelled protein and vegetable particles, which patties comprise protein and carbohydrate in a weight ratio of at least 1.5:1 and which patties have an interior temperature of less than -4°C.

## Patentansprüche

1. Verfahren zur Herstellung eines Lebensmittels, wonach ein oder mehrere gekochte Bratlinge in Verpackung bei einer Temperatur unter 10°C gelagert werden, die Bratlinge einen Feuchtigkeitsgehalt von 70 bis 90 Gew.-% und einen Fettgehalt von 1 bis 15 Gew.-% aufweisen, die Bratlinge geliertes Protein und Pflanzenpartikel und die Bratlinge Protein und Kohlenhydrate in einem Gewichtsverhältnis von mindestens 1,5 : 1 umfassen, wobei bei dem Verfahren mindestens ein Bratling aus der Verpackung separiert und aus der Lagerung genommen wird und mindestens ein Bratling nachfolgend einer Trockenwärmebehandlung unterzogen wird, um die Temperatur im Inneren des Bratlings auf über 40°C anzuheben.

2. Verfahren nach Anspruch 1, wonach die Bratlinge Protein und Kohlenhydrate in einem Gewichtsverhältnis zwischen 2 : 1 und 30 : 1 umfassen.

3. Verfahren nach Anspruch 1 oder 2, wonach das Protein, das in den Bratlingen enthalten ist, aus pflanzlichem Protein, mikrobiellem Protein, Milchprotein, Eiweißprotein oder einer Kombination von zwei oder mehreren davon besteht.

4. Verfahren nach einem der Ansprüche 1 bis 3, wonach das Protein Sojaprotein und Milchprotein umfaßt.

5. Verfahren nach Anspruch 4, wonach das Protein des weiteren Eiweißprotein umfaßt.

6. Verfahren nach einem der Ansprüche 1 bis 5, wonach die Bratlinge 10 bis 60 Gew.-% Ptlanzenpartikel enthalten.

7. Verfahren nach einem der Ansprüche 1 bis 6, wonach die Bratlinge Teilchen von Pfeffer, Zwiebeln, Pilzen, Getreide und/oder einer Kombination von zwei oder mehreren davon umfassen.

8. Verfahren nach einem der Ansprüche 1 bis 7, wonach die Trockenwärmebehandlung Mikrowellenerhitzen, Erhitzen auf einer Heizplatte oder eine Kombination davon einbezieht.

9. Verfahren nach einem der Ansprüche 1 bis 8, wonach der Bratling erhitzt wird, um die Temperatur im Innern des Bratlings auf eine Temperatur von 50 bis 95 °C anzuheben.

10. Verfahren nach einem der Ansprüche 1 bis 9, wonach auf mindestens eine Seite des erhitzten Bratlings Brot aufgelegt wird.

11. Verfahren nach Anspruch 10, wonach der erhitzte Bratling in ein Brötchen gelegt wird.

12. Verfahren nach einem der Ansprüche 1 bis 10, wonach die gekochten Bratlinge bei einer Temperatur zwischen -4 °C und -30 °C gelagert werden.

13. Verpackung, die ein gefrorenes halbfertiges Lebensmittel enthält, das zur Verwendung bei einem Verfahren nach einem der Ansprüche 1 bis 12 geeignet ist, wobei die Verpackung ein oder mehrere gekochte Bratlinge enthält, wonach die Bratlinge einen Feuchtigkeitsgehalt von 70 bis 90 Gew.-% und einen Fettgehalt von 1 bis 15 Gew.-% aufweisen, die Bratlinge geliertes Protein und Pflanzenpartikel enthalten, die Bratlinge Protein und Kohlenhydrate in einem Gewichtsverhältnis von mindestens 1,5 : 1 umfassen und eine Innentemperatur von weniger als -4 °C aufweisen.

## Revendications

1. Méthode de préparation d'un produit alimentaire dans laquelle un ou plusieurs pâtés cuisinés sont stockés dans un emballage à une température inférieure à 10°C, lesquels pâtés ont une teneur en eau de 70 à 90 % en poids et une teneur en matière grasse de 1 à 15 % en poids, lesquels pâtés comprennent des protéines gélifiées et des particules végétales, et lesquels pâtés comprennent des protéines et des glucides dans un rapport en poids d'au moins 1,5/1, dans méthode laquelle au moins un pâté est séparé de l'emballage et retiré du stockage et au moins un pâté est ensuite soumis à un traitement à la chaleur sèche pour faire augmenter la température de l'intérieur du pâté à plus de 40°C.

2. Méthode selon la revendication 1, dans laquelle les pâtés comprennent des protéines et des glucides dans un rapport en poids compris entre 2/1 et 30/1.

3. Méthode selon la revendication 1 ou la revendication 2, dans laquelle les protéines contenues dans les pâtés sont constituées par des protéines végétales, des protéines microbiennes, des protéines du lait, des protéines de blanc d'oeuf ou une combinaison de deux ou plus de celles-ci.

4. Méthode selon l'une quelconque des revendications 1 à 3, dans laquelle les protéines comprennent des protéines de soja et des protéines du lait.

5. Méthode selon la revendication 4, dans laquelle les protéines comprennent en outre des protéines de blanc d'oeuf.

6. Méthode selon l'une quelconque des revendications 1 à 5, dans laquelle les pâtés comprennent de 10 à 60 % en poids de particules végétales.

7. Méthode selon l'une quelconque des revendications 1 à 6, dans laquelle les pâtés comprennent des particules de poivron, d'oignon, de champignon, de maïs ou une combinaison de deux ou plus de celles-ci.

8. Méthode selon l'une quelconque des revendications 1 à 7, dans laquelle le traitement à la chaleur sèche comprend le chauffage au micro-onde, le chauffage sur plaque chauffante, ou une combinaison de ceux-ci.

9. Méthode selon l'une quelconque des revendications 1 à 8, dans laquelle le pâté est chauffé pour faire augmenter la température de l'intérieur du pâté de 50 à 95°C.

10. Méthode selon l'une quelconque des revendications 1 à 9, dans laquelle du pain est placé sur au moins un côté du pâté chauffé.

11. Méthode selon la revendication 10, dans laquelle le pâté chauffé est placé dans un pain à hamburger.

12. Méthode selon l'une quelconque des revendications 1 à 10, dans laquelle les pâtés cuisinés sont stockés à une température comprise entre -4°C et -30°C.

13. Emballage contenant un produit alimentaire semi-fini et congelé, adapté pour être utilisé dans la méthode selon l'une quelconque des revendications 1 à 12, lequel emballage comprend un ou plusieurs pâtés cuisinés, lesquels pâtés ont une teneur en eau de 70 à 90 % en poids et une teneur en matière grasse de 1 à 15 % en poids, lesquels pâtés comprennent des protéines gélifiées et des particules végétales, lesquels pâtés comprennent des protéines et des glucides dans un rapport en poids d'au moins 1,5/1, et lesquels pâtés ont une température intérieure inférieure à -4°C.
